# EUROPÄISCHE PATENTSCHRIFT

(11) **EP 1 004 358 B1**
(45) Veröffentlichungstag und Bekanntmachung des Hinweises auf die Patenterteilung: **06.02.2002**
(21) Anmeldenummer: 99120981.8
(22) Anmeldetag: 04.11.1999
(51) Int. Cl.: B01J 35/04, F01N 3/28, B01D 53/94

(54) **Keramische Matte zur Lagerung eines Monolithen in einem Katalysatorgehäuse**
Ceramic mat for holding a monolithic body in a housing for a catalyst
Matelas céramique pour maintenir un bloc monolithique dans un pot catalytique

(30) Priorität: 19.11.1998 DE 19853422
(43) Veröffentlichungstag der Anmeldung: 31.05.2000
(73) Patentinhaber: Wacker-Chemie GmbH, 81737 München (DE)
(72) Erfinder: Eyhorn, Thomas, 87452 Altusried (DE)
(74) Vertreter: Potten, Holger

(56) Entgegenhaltungen:
- EP-A- 0 256 416
- EP-A- 0 623 567
- DE-A- 19 618 968
- FR-A- 2 102 491
- US-A- 4 985 163
- US-A- 5 556 689

## Beschreibung

Die Erfindung betrifft einen Katalysator, umfassend einen Monolithen und einen Formkörper zu seiner Lagerung.

Ein Katalysator wie er beispielsweise serienmäßig in Kraftfahrzeuge eingebaut wird, besteht aus einem keramischen Monolithen, der an seiner porösen Oberfläche eine katalytisch wirksame Komponente trägt, einem Katalysatorgehäuse und einem Formkörper, der den Monolithen im Katalysatorgehäuse schonend lagert und fixiert.

Als Formkörper, die den keramischen Monolithen im Katalysatorgehäuse schonend lagern und fixieren werden meist "Quellmatten" verwendet (EP-A-256416). Diese bestehen aus ca. 55 Gew.% ungeblähtem Vermiculit, 35 Gew.% keramischer Faser und 10 Gew.% Bindemittel. Aufgabe der Quellmatte ist es, den Monolithen so zu umschließen, daß er bei Beschleunigungen fixiert gehalten wird. Dieses muß auch im Betriebszustand der Fall sein, wobei es gilt, den sich auf Grund der Wärmedehnung der Außenhaut vergrößernden Spalt zwischen Monolith und Katalysatorgehäuse zu kompensieren. Dies geschieht einerseits mit Hilfe von sehr hohen Schließkräften beim Zusammenbau des Katalysators, d. h. beim Verschluß des Katalysatorgehäuses, und andererseits durch den ungeblähten Vermiculit in der Quellmatte. Dieser expandiert bei einer Temperatur von ca. 400°C und bewirkt somit eine Volumenvergrößerung der Quellmatte, welche unter den Einschlußbedingungen im Normalfall eine ausreichende Fixierung des Monolithen gewährleistet. Bei Quellmatten kompensiert somit die Volumenvergrößerung der aufblähenden/aufquellenden Teile das unterschiedliche Spaltmaß zwischen Monolith und Katalysatorgehäuse.

Nachteiligerweise können die hohen Schließkräfte beim Zusammenbau des Katalysators leicht zu einer Beschädigung des filigranen keramischen Monolithen führen und so den Katalysator irreversibel beschädigen.

Zudem gelten übliche Quellmatten, bedingt durch den Gehalt an keramischer Faser als gesundheitlich bedenklich. Es besteht somit ein Bedarf an einem Formkörper zur Lagerung und Fixierung von Monolithen in einem Katalysatorgehäuse, der frei von keramischen Fasern ist.

Ein bekannter Formkörper der diese Bedingung erfüllt, besteht aus Metallgestricken, welche jedoch einen zweischichtigen Innenaufbau erfordern. Daher kommen aus wirtschaftlichen und technischen Gründen solche Formkörper nur selten zum Einsatz.

Die immer kompakteren Bauweise von Fahrzeugen, sowie die-steigenden Abgastemperaturen erfordern Quellmatten, welche sich durch eine gute Wärmedämmung auszeichnen und somit sekundäre oder zusätzliche Wärmedämmmaßnahmen wie Hitzeschilder unnötig machen, bzw. die Anforderungen an diese vermindern.

Aufgabe der Erfindung ist es, einen Katalysator zur Verfügung zu stellen, welcher die genannten Nachteile der Quellmatten vermeidet, gut wärmegedämmt ist und zudem einfach und kostengünstig herzustellen ist.

Wärmedämmende Formkörper sind aus DE-A-19618968 und US-A-4985163 bekannt.

Die vorliegende Erfindung betrifft einen Katalysator gemäß Anspruch 1.

Die Erfindung betrifft ferner die Verwendung eines genannten Formkörpers zur Fixierung eines Monolithen in einem Katalysatorgehäuse.

Vorzugsweise zeigt der mikroporöse Formkörper durch einen Druck von 1 bar über einen Zeitraum von 5 min unmittelbar vor Entfernen des Drucks eine Stauchung auf mindestens 93 % seiner ursprünglichen Dicke.

Vorzugsweise ist die Stauchung eine Minute nach Entfernen des Druckes um mehr als 80% ihres Anfangswertes zurückgegangen.

Mikroporöse Formkörper sind üblicherweise nicht auf Elastizität ausgelegt. Im Gegenteil ist eine druckfeste Platte besonders gewünscht, weshalb solche Formkörper bei der Herstellung einen Härteschritt durchlaufen kännen. Bekannte mikroporöse Formkörper eignen sich daher nicht zur Lagerung und Fixierung eines Monolithen in einem Katalysatorgehäuse, da die Elastizität dieser Formkörper zu gering ist, um den Monolithen zu fixieren.

Nur der erfindungsgemäß verwendete Formkörper besitzt eine so hohe Elastizität, die auf Dauer und bei hohen Temperaturen wie sie im Katalysator unter Betriebsbedingungen herrschen ausreicht, den Monolithen im Katalysatorgehäuse zu fixieren.

Die Elastizität reicht zur Fixierung des Monolithen auch deshalb aus, weil durch die enorm wirksame Wärmedämmung des erfindungsgemäßen Formkörpers die Wärmeausdehnung des Katalysatorgehäuses im heißen Zustand minimiert wird. Daher kommt es nur zu einer geringfügigen Vergrößerung des Spaltes zwischen Katalysatorgehäuse und Monolith. Sowohl Elastizität als auch Wärmedämmung des erfindungsgemäßen Formkörpers wirken sich somit vorteilhaft bei der Fixierung des Monolithen aus.

Die erfindungsgemäße Verwendung des Formkörpers bietet gegenüber bekannten Formkörpern zur Lagerung von Monolithen im Katalysator folgende Vorteile
- Ausreichende Elastizität, auch im Betrieb, um den Monolithen genügend zu fixieren.
- Frei von keramischen Fasern oder anderen schädlichen Substanzen.
- Einbau der Dämmung/Platte bei geringeren Drücken/Kräften als bisher. Dies erlaubt bei Bedarf die Verwendung von längeren Monolithen, weil die Bruchgefahr deutlich verringert wird.
- Beste Wärmedämmung, wodurch die Außentemperatur des Katalysators gesenkt wird. Dadurch können gegebenenfalls zusätzliche sekundäre Hitzeschutzmaßnahmen entfallen.
- Gutes Einbauverhalten bei der Montage.
- Geringes Gewicht.

Vorzugsweise ist das feinteilige Metalloxid ausgewählt aus der Gruppe der pyrogen erzeugten Kieselsäuren, Lichtbogenkieselsäuren, alkaliarmen Fällungskieselsäuren, Siliciumdioxidaerogelen, analog hergestellten Aluminiumoxide sowie deren Mischungen.

Besonders bevorzugt ist das feinteilige Metalloxid ausgewählt aus der Gruppe: pyrogen erzeugte Kieselsäure, Aluminiumoxid und deren Mischungen.

Vorzugsweise weist das feinteilige Metalloxid ein spezifische Oberfläche nach BET von vorzugsweise 50 bis 700 m²/g, insbesondere 70 bis 400 m²/g, auf.

Der erfindungsgemäße Formkörper kann zudem Komponenten enthalten, ausgewählt aus der Gruppe, der anorganischen Fasern, der organischen Fasern und der refraktären Materialien, die sich bei einer Temperatur oberhalb von 300°C aufblähen.

Der erfindungsgemäß verwendete Formkörper enthält folgende Komponenten:

| | |
|---|---|
| 70 - 90 Gew.% | feinteiliges Metalloxid |
| 1 - 5 Gew.% | gesundheitlich unbedenkliche Fasern |
| 5 - 25 Gew.% | Trübungsmittel |
| 0 - 5 Gew.% | organische Fasern |
| 0 - 25 Gew.% | refraktäres Material, welches sich bei einer Temperatur oberhalb 300°C aufbläht. |

Insbesondere bevorzugt besteht der Formkörper aus den genannten Komponenten.

Das Trübungsmittel ist vorzugsweise ausgewählt aus der Gruppe Ilmenit, Titandioxid, , Eisen-II-Eisen-III-Mischoxid, Chromdioxid, Zirkonoxid, Mangandioxid, Eisenoxid, Rutil, Zirkonsilikat, Siliciumcarbid und deren Mischungen.

Aufgrund seines geringen spezifischen Gewichts und seines Absorbtionsverhaltens im Infrarotbereich ist Siliciumcarbid als Trübungsmittel besonders bevorzugt.

Das Trübungsmittel hat bevorzugt eine Korngrößen im Bereich von 0,1 bis 10 µm.

Bei den gesundheitlich unbedenklichen Fasern handelt es sich vorzugsweise um anorganische Fasern ohne lungengängige Anteile oder um Fasern die auf Grund ihrer chemischen Zusammensetzung gesundheitlich unbedenklich sind. Bei den anorganischen Fasern ohne lungengängige Anteile handelt es sich vorzugsweise um Textilglasfasern oder Quarzglasfasern.

Besonders bevorzugt sind sie ausgewählt aus der Gruppe: hochtemperaturfeste Fasern mit einem SiO₂ Gehalt > 60 Gew.%, bevorzugt >90 Gew.%, textile Fasern aus R- Glas, textile Fasern aus S2-Glas, textile Fasern aus ECR -Glas und Fasern aus Aluminiumsilicat. Der Faserdurchmesser ist vorzugsweise > 3µm.

Ein Beispiel für hochtemperaturfeste Fasern mit einem SiO₂ Gehalt >90 Gew.% sind Silicafasern.

Die organischen Fasern dienen zur Erhöhung der Grünfestigkeit des Formkörpers. Sie sind vorzugsweise ausgewählt aus der Gruppe: Fasern aus Kunststoff, Naturfasern, Viskosefasern, Baumwollfasern, Zellstoff, Grafit und Kohlefasern.

Ein Beispiel für ein refraktäres Material welches sich bei einer Temperatur oberhalb 300°C aufbläht, ist ungeblähter Vermiculit.

Der erfindungsgemäß verwendete Formkörper hat vorzugsweise die Form einer Platte.

Eine Platte ohne refraktäres Material hat im Ausgangszustand eine Dichte von 100 - 240 kg/m³, besonders bevorzugt 130 bis 230 kg/m³ und im eingebauten Zustand eine Dichte von vorzugsweise 120 - 300 kg/m³.

Die Platte kann zum besseren Handling in Folie verschweißt, einseitig oder beidseitig mit organischen oder anorganischen Geweben, Papieren und Folien versehen werden.

Die geringe Dichte des erfindungsgemäßen Materials bewirkt eine für mikroporöse Materialien hohe Elastizität der Platte.

Zur Herstellung des Formkörpers werden die einzelnen Komponenten intensiv vermischt und die erhaltene Mischung in für mikroporöse Werkstoffe bekannter Weise verpresst.

Die Erfindung betrifft ferner Verfahren zur Fixierung eines Monolithen in einem Katalysatorgehäuse. Ein solches Verfahren ist dadurch gekennzeichnet, daß ein genannter Formkörper um den Monolithen herumgelegt wird, der so umhüllte Monolith in das Katalysatorgehäuse gelegt wird und das Katalysatorgehäuse anschließend verschlossen wird.

Ein anderes Verfahren zur Fixierung eines Monolithen in einem Katalysatorgehäuse ist dadurch gekennzeichnet, daß ein genannter Formkörper so in das Katalysatorgehäuse gelegt wird, daß nach dem Einlegen des Monolithen in das Katalysatorgehäuse beim Schließen des Katalysatorgehäuses eine allseitig geschlossene Umhüllung aus dem Formkörper um den Monolith entsteht.

Zum Verschließen des Katalysatorgehäuses sind bei Verwendung des erfindungsgemäßen Materials nur geringe Kräfte notwendig. Dies ist im Hinblick auf die Bruchanfälligkeit des keramischen Monolithen von Vorteil. Die Friktion zwischen erfindungsgemäßen Formkörper und Monolith ist so groß, daß auch im heißen Zustand die zur Fixierung erforderlichen Haltekräfte auf den Monolithen wirken. Zudem vermindert die äußerst effiziente Wärmedämmung des erfindungsgemäßen Materials eine starke Erwärmung und eine daraus resultierende Ausdehnung des Katalysatorgehäuses.

Die folgenden Beispiele dienen der weiteren Erläuterung der Erfindung:

### Beispiel 1:

78 Gew.% hochdisperse Kieselsäure (BET 280 m²/g) käuflich erhältlich unter der Bezeichnung HDK N25 bei Wacker Chemie, München, 12 Gew.% SiC (Feinheit <15 µm) käuflich erhältlich unter der Bezeichnung Silcar® P8 bei ESK, München, 3 Gew.% Textilglasfaser (Siliciumgehalt >92%) käuflich erhältlich unter der Bezeichnung Asglasil bei der Firma Asglawo, Freiberg und 7 Gew.% eines ungeblähten Vermiculits der Körnung 1 käuflich erhältlich unter der Bezeichnung Vermiculit roh bei Kramer Progetha, Düsseldorf wurden trocken in einem Fluidmischer 5 min. intensiv vermischt. Die so erhaltene Mischung wurde axial zu ebenen Platten mit den Maßen 0,5 x 1,0 m² einer Dicke von 7 mm und einer Dichte von 160 kg/m³ verpresst. Aus dieser Platte wurde durch Stanzen, Sägen, Schneiden oder anderen Möglichkeiten die jeweils benötigte Form hergestellt.

Zur Messung des elastischen Verhaltens der Formkörper gemäß Beispielen und Vergleichsbeispiel wurde eine kraftgesteuerte Presse mit Wegmesseinrichtung verwendet. Die Plattendicke wurde gemessen. Der Flächendruck wurde über die Kraftregulierung auf die Platte aufgebracht und die Stauchung mit Hilfe der Messeinrichtung nach 5 Minuten ermittelt. Nach einer Belastungszeit von 5 Minuten wurde die Platte entlastet und nach einer weiteren Minute die Plattendicke nochmals ermittelt.

Die Platte wurde dabei um 1,05 mm (entsprechend auf 85% ihrer ursprünglichen Dicke) komprimiert. Nach Entfernen des Druckes dehnte sie sich auf eine Dicke von 6,85 mm, entsprechend 86% der Stauchung, aus.

Diese Elastizität ist für die Lagerung des Monolithen im Katalysatorgehäuse ausreichend.

### Beispiel 2:

Eine Platte mit den Maßen 300 x 300 x 7 mm³ hergestellt gemäß Beispiel 1 bestehend aus (Angaben in Gew.%) 78 % HDK N25, 19 % SiC (Feinheit kleiner 15 µm), 3 % Textilglasfaser (Siliciumgehalt >92%) mit einer Dichte von 160 kg/m³ wurde mit einem Flächendruck von 1,3 bar belastet. Die Platte wurde dabei um 0,84 mm (entsprechend auf 88% ihrer ursprünglichen Dicke) komprimiert. Nach Entfernen des Druckes dehnte sie sich auf eine Dicke von 6,90 mm, entsprechend 88% der Stauchung, aus.

Diese Elastizität ist für die Lagerung des Monolithen im Katalysatorgehäuse ausreichend.

### Beispiel 3:

Eine Platte mit den Maßen 300 mm x 300 mm x 7 mm, hergestellt analog Beispiel 1, bestehend aus (Angaben in Gew.%) 85 % HDK (BET 250 m²/g), 11 % SiC (Silcar P8), 2 % Textilglasfaser R-Glas (Vetrotex,Aachen), 2% Zellstofffaser (Arbocell FIF400), mit einer Dichte von 220 kg/m³ wurde mit einem Flächendruck von 1,0 bar belastet. Die Platte wurde dabei um 0,42 mm auf 94 % ihrer ursprünglichen Dicke komprimiert. Nach Entfernen des Druckes dehnte sie sich auf eine Dicke von 6,93 mm (entsprechend 83 % der Stauchung) aus.

Diese Elastizität ist für die Lagerung des Monolithen im Katalysatorgehäuse ausreichend.

### Vergleichsbeispiel 1:

Eine Standardplatte, käuflich erhältlich unter der Bezeichnung Wacker WDS® 1000, bei der Firma Wacker Chemie GmbH (München) bestehend aus (Angaben in Gew.%) 55 % HDK N25 (BET 280 m²/g), 40 % Zikonsilicat, 5 % Textilglasfaser (Siliciumgehalt >92%) mit einer Dichte von 320 kg/m³ und einer Dicke von 10,0 mm wurde mit Flächendruck von 1,3 bar belastet.

Die Platte wurde dabei auf 96,7 % ihrer ursprünglichen Dicke komprimiert. Nach Entfernen des Drucks dehnte sie sich auf eine Dicke von 9,8 mm entsprechend 40 % der Stauchung, aus.

Diese Elastizität ist für die Lagerung des Monolithen im Katalysatorgehäuse nicht ausreichend.

## Patentansprüche

1. Katalysator umfassend einen Monolithen, ein Mittel zum Fixieren des Monolithen und ein Katalysatorgehäuse, **dadurch gekennzeichnet, daß** das Mittel zum Fixieren des Monolithen ein mikroporöser Formkörper, der
| | |
|---|---|
| 70 - 90 Gew.% | feinteiliges Metalloxid |
| 1 - 5 Gew.% | gesundheitlich unbedenkliche Fasern |
| 5 - 25 Gew.% | Trübungsmittel |
| 0 - 5 Gew.% | organische Fasern |
| 0 - 25 Gew.% | refraktäres Material, welches sich bei einer Temperatur oberhalb 300°C aufbläht, enthält |
und ohne Berücksichtigung des refraktären Materials eine Dichte von 100 - 240 kg/m³ besitzt und durch einen Druck von 1 bar über einen Zeitraum von 5 min unmittelbar vor Entfernen des Drucks eine Stauchung auf mindestens 96 % seiner ursprünglichen Dicke aufweist und diese Stauchung eine Minute nach Entfernen des Druckes um mehr als 70% ihres Anfangswertes zurückgegangen ist.

2. Verwendung eines mikroporösen Formkörpers, der
| | |
|---|---|
| 70 - 90 Gew.% | feinteiliges Metalloxid |
| 1 - 5 Gew.% | gesundheitlich unbedenkliche Fasern |
| 5 - 25 Gew.% | Trübungsmittel |
| 0 - 5 Gew.% | organische Fasern |
| 0 - 25 Gew.% | refraktäres Material, welches sich bei einer Temperatur oberhalb 300°C aufbläht, enthält |
und ohne Berücksichtigung des refraktären Materials eine Dichte von 100 - 240 kg/m³ besitzt und durch einen Druck von 1 bar über einen Zeitraum von 5 min unmittelbar vor Entfernen des Drucks eine Stauchung auf mindestens 96 % seiner ursprünglichen Dicke aufweist und diese Stauchung eine Minute nach Entfernen des Druckes um mehr als 70% ihres Anfangswertes zurückgegangen ist zur Fixierung eines Monolithen in einem Katalysatorgehäuse.

3. Verfahren zur Fixierung eines Monolithen in einem Katalysatorgehäuse, **dadurch gekennzeichnet, daß** ein mikroporöser Formkörper, der
| | |
|---|---|
| 70 - 90 Gew.% | feinteiliges Metalloxid |
| 1 - 5 Gew.% | gesundheitlich unbedenkliche Fasern |
| 5 - 25 Gew.% | Trübungsmittel |
| 0 - 5 Gew.% | organische Fasern |
| 0 - 25 Gew.% | refraktäres Material, welches sich bei einer Temperatur oberhalb 300°C aufbläht, enthält |
und ohne Berücksichtigung des refraktären Materials eine Dichte von 100 - 240 kg/m³ besitzt und durch einen Druck von 1 bar über einen Zeitraum von 5 min unmittelbar vor Entfernen des Drucks eine Stauchung auf mindestens 96 % seiner ursprünglichen Dicke aufweist und diese Stauchung eine Minute nach Entfernen des Druckes um mehr als 70% ihres Anfangswertes zurückgegangen ist um den Monolithen herumgelegt wird, der so umhüllte Monolith in das Katalysatorgehäuse gelegt wird und das Katalysatorgehäuse anschließend verschlossen wird.

4. Verfahren zur Fixierung eines Monolithen in einem Katalysatorgehäuse, **dadurch gekennzeichnet, daß** ein mikroporöser Formkörper, der 70 - 90 Gew.% feinteiliges Metalloxid
| | |
|---|---|
| 1 - 5 Gew.% | gesundheitlich unbedenkliche Fasern |
| 5 - 25 Gew.% | Trübungsmittel |
| 0 - 5 Gew.% | organische Fasern |
| 0 - 25 Gew.% | refraktäres Material, welches sich bei einer Temperatur oberhalb 300°C aufbläht, enthält |
und ohne Berücksichtigung des refraktären Materials eine Dichte von 100 - 240 kg/m³ besitzt und durch einen Druck von 1 bar über einen Zeitraum von 5 min unmittelbar vor Entfernen des Drucks eine Stauchung auf mindestens 96 % seiner ursprünglichen Dicke aufweist und diese Stauchung eine Minute nach Entfernen des Druckes um mehr als 70% ihres Anfangswertes zurückgegangen ist so in das Katalysatorgehäuse gelegt wird, daß nach dem Einlegen des Monolithen in das Katalysatorgehäuse beim Schließen des Katalysatorgehäuses eine allseitig geschlossene Umhüllung aus dem Formkörper um den Monolith entsteht.

## Claims

1. Catalytic converter comprising a monolith, a means for immobilizing the monolith and a catalytic converter casing, **characterized in that** its means for immobilizing the monolith [lacuna] a microporous moulding which comprises
| | |
|---|---|
| 70 - 90% by weight | of finely divided metal oxide, |
| 1 - 5% by weight | of fibres which do not represent a health risk, |
| 5 - 25% by weight | of opacifiers, |
| 0 - 5% by weight | of organic fibres and |
| 0 - 25% by weight | of refractory material which expands at a temperature above 300°C, |
and has a density of 100 - 240 kg/m³, without taking into account the refractory material, and has a compression to at least 96% of its original thickness immediately after a pressure of 1 bar applied for a period of 5 minutes has been removed, and this compression has dropped by more than 70% of its initial value one minute after removal of the pressure.

2. Use of a microporous moulding which comprises
| | |
|---|---|
| 70 - 90% by weight | of finely divided metal oxide, |
| 1 - 5% by weight | of fibres which do not represent a health risk, |
| 5 - 25% by weight | of opacifiers, |
| 0 - 5% by weight | of organic fibres and |
| 0 - 25% by weight | of refractory material which expands at a temperature above 300°C, |
and has a density of 100 - 240 kg/m³, without taking into account the refractory material, and has a compression to at least 96% of its original thickness immediately after a pressure of 1 bar applied for a period of 5 minutes has been removed, and this compression has dropped by more than 70% of its initial value one minute after removal of the pressure, for immobilizing a monolith in a catalytic converter casing.

3. Process for immobilizing a monolith in a catalytic converter casing, **characterized in that** a microporous moulding which comprises
| | |
|---|---|
| 70 - 90% by weight | of finely divided metal oxide, |
| 1 - 5% by weight | of fibres which do not represent a health risk, |
| 5 - 25% by weight | of opacifiers, |
| 0 - 5% by weight | of organic fibres and |
| 0 - 25% by weight | of refractory material which expands at a temperature above 300°C, |
and has a density of 100 - 240 kg/m³, without taking into account the refractory material, and has a compression to at least 96% of its original thickness immediately after a pressure of 1 bar applied for a period of 5 minutes has been removed, and this compression has dropped by more than 70% of its initial value one minute after removal of the pressure, is wrapped around the monolith, the monolith wrapped in this way is placed in the catalytic converter casing and the casing is subsequently sealed.

4. Process for immobilizing a monolith in a catalytic converter casing, **characterized in that** a microporous moulding which comprises
| | |
|---|---|
| 70 - 90% by weight | of finely divided metal oxide, |
| 1 - 5% by weight | of fibres which do not represent a health risk, |
| 5 - 25% by weight | of opacifiers, |
| 0 - 5% by weight | of organic fibres and |
| 0 - 25% by weight | of refractory material which expands at a temperature above 300°C, |
and has a density of 100 - 240 kg/m³, without taking into account the refractory material, and has a compression to at least 96% of its original thickness immediately after a pressure of 1 bar applied for a period of 5 minutes has been removed, and this compression has dropped by more than 70% of its initial value one minute after removal of the pressure, is placed in the catalytic converter casing in such a way that, after the monolith has been laid in the catalytic converter casing, a wrapping made from the moulding and closed on all sides is formed around the monolith when the converter casing is closed.

## Revendications

1. Catalyseur comprenant un monolithe, un moyen pour fixer le monolithe et un boîtier de catalyseur, **caractérisé en ce que** le moyen pour fixer le monolithe est un corps moulé qui contient
| | |
|---|---|
| de 70 à 90% en poids | d'oxyde métallique finement divisé, |
| de 1 à 5% en poids | de fibres qui ne présentent pas de risque pour la santé, |
| de 5 à 25% en poids | d'agent opacifiant, |
| de 0 à 5% en poids | de fibres organiques, et |
| de 0 à 25% en poids | d'un matériau réfractaire qui gonfle à une température supérieure à 300°C, |
et qui présente une densité de 100 à 240 kg/m³, sans tenir compte du matériau réfractaire, et une compression d'au moins 96% de son épaisseur initiale immédiatement avant qu'une pression de 1 bar appliquée pendant une durée de 5 minutes soit supprimée, et **en ce que** cette compression a diminué de plus de 70% de sa valeur initiale une minute après la suppression de la pression.

2. Utilisation d'un corps moulé qui contient
| | |
|---|---|
| de 70 à 90% en poids | d'oxyde métallique finement divisé, |
| de 1 à 5% en poids | de fibres qui ne présentent pas |
| | de risque pour la santé, |
| de 5 à 25% en poids | d'agent opacifiant, |
| de 0 à 5% en poids | de fibres organiques, et |
| de 0 à 25% en poids | d'un matériau réfractaire qui gonfle à une température supérieure à 300°C. |
et qui présente une densité de 100 à 240 kg/m³ sans tenir compte du matériau réfractaire et une compression d'au moins 96% de son épaisseur initiale immédiatement avant qu'une pression de 1 bar appliquée pendant une durée de 5 minutes soit supprimée, cette compression ayant diminué de plus de 70% de sa valeur initiale une minute après la suppression de la pression, pour la fixation d'un monolithe dans un boîtier de catalyseur.

3. Procédé pour la fixation d'un monolithe dans un boîtier de catalyseur **caractérisé en ce qu'**un corps moulé microporeux qui contient
| | |
|---|---|
| de 70 à 90% en poids | d'oxyde métallique finement divisé, |
| de 1 à 5% en poids | de fibres qui ne présentent pas de risque pour la santé, |
| de 5 à 25% en poids | d'agent opacifiant, |
| de 0 à 5% en poids | de fibres organiques, et |
| de 0 à 25% en poids | d'un matériau réfractaire qui gonfle à une température supérieure à 300°C, |
et qui présente une densité de 100 à 240 kg/m³, sans tenir compte du matériau réfractaire, et une compression d'au moins 96% de son épaisseur initiale immédiatement avant qu'une pression de 1 bar appliquée pendant une durée de 5 minutes soit supprimée, cette compression ayant diminué de plus de 70% de sa valeur initiale une minute après la suppression de la pression, est enveloppé autour du monolithe, le monolithe ainsi enveloppé est mis dans le boîtier de catalyseur et le boîtier de catalyseur est ensuite fermé.

4. Procédé pour la fixation d'un monolithe dans un boîtier de catalyseur, **caractérisé en ce qu'**un corps microporeux qui contient
| | |
|---|---|
| de 70 à 90% en poids | d'oxyde métallique finement divisé, |
| de 1 à 5% en poids | de fibres qui ne présentent pas de risque pour la santé, |
| de 5 à 25% en poids | d'agent opacifiant, |
| de 0 à 5% en poids | de fibres organiques, et |
| de 0 à 25% en poids | d'un matériau réfractaire qui gonfle à une température supérieure à 300°C, |
et qui présente une densité de 100 à 240 kg/m³, sans tenir compte du matériau réfractaire, et une compression d'au moins 96% de son épaisseur initiale immédiatement avant qu'une pression de 1 bar appliquée pendant une durée de 5 minutes soit supprimée, cette compression ayant diminué de plus de 70% de sa valeur initiale une minute après la suppression de la pression, est mis dans le boîtier de catalyseur de telle manière qu'après insertion du monolithe dans le boîtier de catalyseur, lors de la fermeture du boîtier de catalyseur se forme une enveloppe fermée de tous côtés à partir du corps coulé autour du monolithe.
